# FASCICULE DE BREVET EUROPEEN

(11) **EP 0 527 671 B1**
(45) Date de publication et mention de la délivrance du brevet: **13.09.1995**
(21) Numéro de dépôt: 92402229.6
(22) Date de dépôt: 05.08.1992
(51) Int. Cl.: F16B 12/20, E04B 1/49

(54) **Elément pour l'assemblage de pièces en bois**
Zusammenbauelement für Holzstücke
Connecting element for pieces of wood

(30) Priorité: 13.08.1991 FR 9110453
(43) Date de publication de la demande: 17.02.1993
(73) Titulaire: Preziosa, Christian, 28150 Voves (FR)
(72) Inventeur: Preziosa, Christian, 28150 Voves (FR)
(74) Mandataire: Boivin, Claude

(56) Documents cités:
- EP-A- 0 398 785
- FR-A- 2 263 410
- GB-A- 944 184
- GB-A- 1 000 015

## Description

Le document EP-A- 0 398 785 décrit un élément pour l'assemblage d'une pièce en bois dans une rainure d'une seconde pièce de bois, qui a une section en U dont la largeur est sensiblement égale à celle de la rainure et dont le fond présente des dents d'ancrage tournées vers l'intérieur.

La présente invention a pour objet un élément d'assemblage de ce type perfectionné de manière à améliorer l'ancrage.

Cet élément est caractérisé comme défini dans la partie caractérisante de la revendication 1.

On a décrit ci-après, à titre d'exemple non limitatif, un mode de réalisation de l'élément d'assemblage selon l'invention avec référence aux dessins annexés dans lesquels :

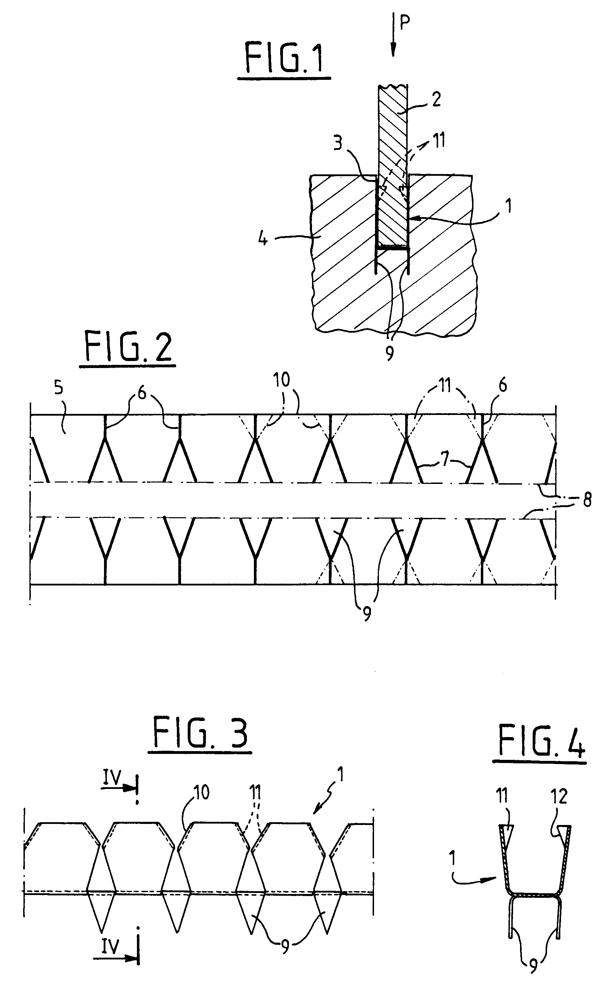

La Figure 1 est une vue en coupe transversale montrant deux pièces de bois assemblées à l'aide de l'élément;
La Figure 2 montre une plaque à partir de laquelle l'élément est obtenu;
La Figure 3 est une vue en élévation de l'élément;
La Figure 4 en est une coupe suivant IV-IV de la Figure 3.

Tel qu'il est représenté au dessin, l'élément d'assemblage 1 est destiné à l'assemblage d'une pièce de bois 2 dans une rainure 3 d'une pièce de bois 4, l'épaisseur de la pièce 2 étant égale, à un jeu près, à la largeur de la rainure.

L'élément 1 est réalisé à partir d'une plaque métallique 5 sur les bords longitudinaux de laquelle ont été découpées de courtes lignes 6 qui sont perpendiculaires à ces bords et sont prolongées chacune par des lignes de coupe 7 s'étendant obliquement de part et d'autre de la ligne 6. La plaque 1 a été pliée en forme de U légèrement évasé autour de deux lignes longitudinales 8 passant par les extrémités des lignes 7. Ces lignes déterminent des dents triangulaires 9 qui ont été rabattues vers l'extérieur. Par ailleurs, les parties 11 adjacentes aux lignes de coupe 6 ont été rabattues vers l'intérieur, autour de lignes 10 obliques par rapport aux bords longitudinaux de la plaque, en formant des dents 11.

L'élément 1 a ainsi la forme d'un U légèrement évasé dont les parois longitudinales sont munies de dents 11 tournées vers l'intérieur; la distance entre les extrémités des dents 11 et la largeur du fond de l'élément sont sensiblement égales à l'épaisseur de la pièce 2. Le fond de l'élément est prolongé par des dents 9 dirigées vers l'extérieur et situées sensiblement dans le prolongement des plans des parois latérales de l'élément. La hauteur de l'élément est inférieure à la profondeur de la rainure.

Pour fixer la pièce 2 dans la rainure 3 de la pièce 4, on commence par chausser l'élément 1 sur l'un des bords longitudinaux de la pièce 2. Puis on engage l'ensemble dans la rainure 3 et on exerce une poussée transversale sur la pièce 2, comme indiqué par la flèche P. Sous l'effet de cette poussée, les parois latérales de l'élément se redressent de sorte que les dents 11 pénètrent dans la pièce 2 et s'y ancrent. En fin de mouvement, les dents 9 pénètrent et s'ancrent dans le fond de la gorge 3.

On notera que, si une traction est par suite exercée transversalement sur la pièce 2, le bord d'attaque 12 des dents 11 s'étend transversalement à la direction de la traction, du fait de l'obliquité du pli 10. Il n'y a donc aucun risque que les dents découpent la pièce 2 en permettant à celle-ci de glisser et de sortir de la gorge 3.

## Revendications

1. Elément pour l'assemblage d'une première pièce de bois (2) dans une rainure (3) d'une seconde pièce de bois (4), qui a une section en U dont la largeur est sensiblement égale à celle de la rainure (3) et dont le fond présente des dents d'ancrage (9) tournées vers l'extérieur,
caractérisé en ce que sa section est en U ouvert et en ce que ses parois latérales présentent à proximité de leur bord libre des dents d'ancrage (11) pliées vers l'intérieur sensiblement perpendiculairement aux parois en ayant leur pointe dirigée vers l'intérieur.

2. Elément selon la revendication 1,
caractérisé en ce que sa hauteur est inférieure à la profondeur de la rainure.

3. Elément selon la revendication 1 ou 2,
caractérisé en ce que le bord d'attaque (12) des dents intérieures (11) est oblique par rapport au plan de ses parois latérales.

4. Elément selon l'une des revendications 1 à 3,
caractérisé en ce que la distance entre les extrémités des dents (11) est sensiblement égale à la largeur du fond.

5. Elément selon l'une des revendications 2 à 4,
caractérisé en ce que les dents extérieures (9) sont situées sensiblement dans le prolongement des plans des parois latérales.

6. Procédé de fabrication de l'élément selon l'une quelconque des revendications 1 à 5,
dans lequel on plie une plaque métallique (5) suivant deux lignes longitudinales de façon à lui donner une forme sensiblement en U,
caractérisé en ce qu'on découpe dans les bords longitudinaux de la plaque des lignes (6) perpendiculaires à ces bords et prolongées chacune par des lignes (7) s'étendant obliquement de part et d'autre de lignes (6) correspondantes, qu'on rabat vers l'extérieur les portions (9) délimitées par les lignes de coupe (7), et qu'on rabat vers l'intérieur les parties (11) adjacentes aux lignes de coupe (6).

7. Procédé selon la revendication 4,
caractérisé en ce que les lignes des pliages (10) des portions (11) sont obliques par rapport à la direction longitudinale de la plaque.

## Claims

1. Element for assembling a first wooden piece (2) in a groove (3) of the second wooden piece (4) and which has a U-shaped section whose width is approximately equal that of the groove (3) and whose bottom has anchorage teeth (9) orientated outwardly, wherein its section has the shape of an open U and wherein its lateral walls close to their free edge have anchorage teeth (11) folded inwardly approximately perpendicular to the walls, thus having their point directed inwardly.

2. Element according to claim 1, wherein its height is smaller than the depth of the groove.

3. Element according to claim 1 or 2, wherein the leading edge (12) of the internal teeth (11) is oblique with respect to the plane of its lateral walls.

4. Element according to any one of claims 1 to 3, wherein the distance between the ends of the teeth (11 is approximately equal the width of the bottom.

5. Element according to any one of claims 2 to 4, wherein the outer teeth (9) are situated approximately in the prolongation of the planes of the lateral walls.

6. Method for producing the element according to any one of clakms 1 to 5, in which a metallic plate (5) is folded along two longitudinal lines so as to provide it with the shape of a U, wherein lines (6) are cut in the longitudinal edges of the plate and are perpendicular to said edges and each being extended by lines (7) extending obliquely on both sides of corresponding lines (6), wherein the portions (9) delimited by the cutting lines (7) are folded back outwardly, and wherein the portions adjacent to the cutting lines (6) are folded back inwardly.

7. Method according to claim 4, wherein the lines of the foldings (10) of the portions (11) are oblique with respect to the longitudinal direction of the plate.

## Patentansprüche

1. Bauelement zur Montage eines ersten Holzstücks (2) in einer Nut (3) eines zweiten Holzstücks (4) mit einem U-förmigen Querschnitt, dessen Breite im wesentlichen gleich der Breite der Nut ist und dessen Boden nach außen gerichtete Verankerungszähne (9) aufweist, dadurch gekennzeichnet, daß sein Querschnitt ein offenes U bildet und das seine Seitenwände in der Nähe ihres freien Randes nach innen gebogene Verankerungszähne (11) aufweisen, die im wesentlichen senkrecht zur Wand stehen und deren Spitzen nach innen gerichtet sind.

2. Bauelement nach Anspruch 1, dadurch gekennzeichnet, daß seine Höhe kleiner ist als die Tiefe der Nut.

3. Bauelement nach Anspruch 1 oder 2, dadurch gekennzeichnet, daß die Eingriffskante (12) der inneren Zähne (11) in bezug auf die Ebene seiner Seitenwände schräg verläuft.

4. Bauelement nach einem der Ansprüche 1 bis 3, dadurch gekennzeichnet, daß der Abstand zwischen den äußeren Enden der Zähne (11) im wesentlichen gleich der Breite des Bodens ist.

5. Bauelement nach einem der Ansprüche 2 bis 4, dadurch gekennzeichnet, daß die äußeren Zähne (9) im wesentlichen in der Verlängerung der Ebenen der Seitenwände liegen.

6. Verfahren zur Herstellung eines Bauelements nach einem beliebigen der Ansprüche 1 bis 5, bei dem eine Metallplatte (5) entlang zweier in Längsrichtung verlaufender Linien derart umgebogen wird, daß ihr eine im wesentlichen U-förmige Gestalt gegeben wird, dadurch gekennzeichnet, daß in die in Längsrichtung verlaufenden Kanten der Platte senkrecht zu diesen Kanten verlaufende Linien (6) eingeschnitten werden und jede von ihnen durch sich schräg von den entsprechenden Linien (6) nach beiden Seiten hin erstreckende Linien (7) verlängert ist, daß die durch die Schnittlinien (7) begrenzten Teile nach außen umgebogen werden und das die den Schnittlinien (6) benachbarten Teile (11) nach innen umgebogen werden.

7. Verfahren nach Anspruch 4, dadurch gekennzeichnet, daß die Faltlinien (10) der Teile (11) in bezug auf die Längsrichtung der Platte schräg verlaufen.
